# EUROPÄISCHE PATENTSCHRIFT

(11) **EP 0 855 314 B1**
(45) Veröffentlichungstag und Bekanntmachung des Hinweises auf die Patenterteilung: **26.05.2004**
(21) Anmeldenummer: 97122052.0
(22) Anmeldetag: 15.12.1997
(51) Int. Cl.: B60R 21/16, B60R 21/20

(54) **Gassack-Modul**
Air bag module
Module de sac de sécurité gonflable

(30) Priorität: 22.01.1997 DE 29701063 U
(43) Veröffentlichungstag der Anmeldung: 29.07.1998
(73) Patentinhaber: TRW Automotive GmbH, 73553 Alfdorf (DE)
(72) Erfinder: Berger, Jürgen, 73557 Mutlangen (DE)
(74) Vertreter: Kitzhofer, Thomas, Dipl.-Ing.

(56) Entgegenhaltungen:
- DE-A- 4 415 374
- DE-U- 29 604 345
- DE-U- 29 613 269

## Beschreibung

Die Erfindung betrifft ein Gassack-Modul eines Fahrzeuginsassen-Rückhaltesystems, mit einem im wesentlichen rohrförmigen Gasgenerator, einem den Gasgenerator umgebenden, mit einem Längsschlitz versehenen, rinnenförmigen Montagegehäuse zur Befestigung des Gasgenerators am Fahrzeug und einem Gassack.

Ein gattungsgemäßes Gassack-Modul ist aus der DE 44 15 374.0 bekannt. Dabei ist der Gasgenerator in ein schellenartiges Gehäuseteil eines kastenförmigen Druckgasbehälters geklemmt. Der Druckgasbehälter ist auf seiner Oberseite offen, und sein umlaufender Rand wird vom Saum der Berandung der Einblasöffnung des Gassacks hintergriffen.

Darüber hinaus sind Gassack-Module bekannt, bei denen der den Einblasmund umgebende Gassackrand zwischen einem in dem Inneren des Gassacks angeordneten Rahmenteil und dem umlaufenden Rand eines Druckgasbehälters geklemmt wird.

Die Erfindung schafft ein Gassack-Modul, das aus weniger Einzelteilen besteht und schnell montiert werden kann.

Dies wird bei einem Gassack-Modul der eingangs genannten Art dadurch erreicht, daß die den Längsschlitz begrenzenden, gegenüberliegenden Wandungen des Montagegehäuses jeweils U-förmig zu einer Doppellage gebogen sind, daß sich jeweils die mit einem Abschlußrand versehene Lage jeder Wandung in Richtung des Gasgenerators erstreckt und daß der Abschlußrand an dem Gasgenerator anliegt. Separate Schellen zur Befestigung des Gasgenerators sind beim erfindungsgemäßen Gassack-Modul nicht mehr erforderlich. Durch die U-Form erhalten die Wandungen eine ausgezeichnete elastische Nachgiebigkeit, wodurch ihr Abschlußrand stets mit einer gewissen Mindestkraft gegen den Gasgenerator drückt.

Gemäß einer bevorzugten Ausführungsform erstrecken sich die doppellagigen Wandungen seitlich nach außen und bilden zwei Flansche zur Befestigung des Montagegehäuses am Fahrzeug. Die Wandungen haben damit eine Doppelfunktion, indem sie einerseits für die Klemmung des Gasgenerators sorgen und andererseits als Flansche zur Befestigung dienen. Zudem werden, wenn die Flansche z.B. am Fahrzeug angeschraubt werden, die beiden Lagen der Wandung gegeneinandergepreßt, so daß die nach innen gerichteten Abschlußränder noch stärker gegen den Gasgenerator gedrückt werden. Das Montagegehäuse zeichnet sich durch ein geringes Gewicht aus, denn separat angeschweißte oder angeformte Flansche sind nicht notwendig. Der Gasgenerator ist am Montagegehäuse befestigt und nicht unmittelbar auch mit dem Gassack, so daß Gassack und Gasgenerator einen gewissen Abstand voneinander aufweisen können und der Einblasmund in einen Bereich gelegt werden kann, in dem er durch das ausströmende Gas thermisch geringer belastet wird.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Fig. 1 eine perspektivische Schnittansicht durch das erfindungsgemäße Gassack-Modul ohne den Gassack; und
Fig. 2 einen Ausschnitt des Gassack-Moduls nach Fig. 1, der die Befestigung des Gassacks am Montagegehäuse zeigt.

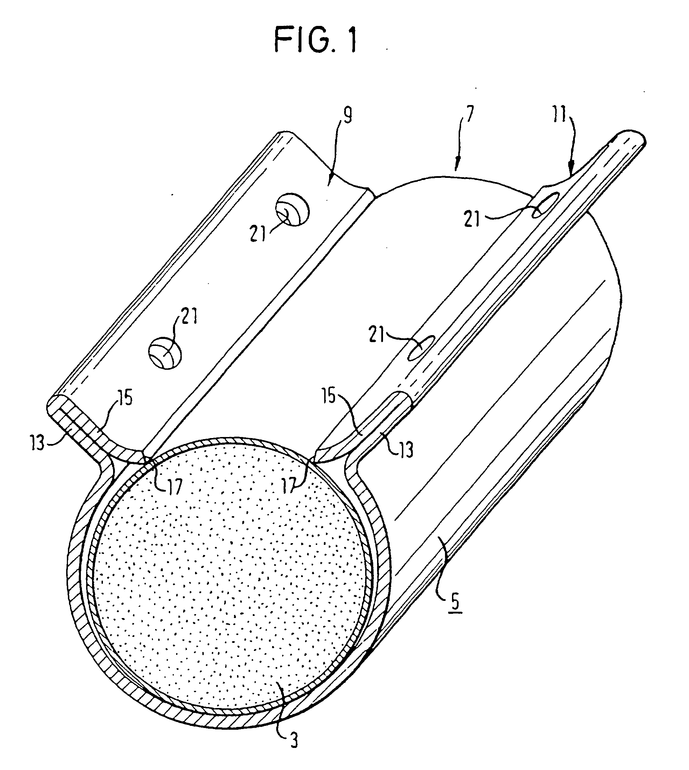

In Fig. 1 ist ein Gassack-Modul gezeigt, das einen üblichen rohrförmigen Gasgenerator 3 aufweist. Der Gasgenerator 3 ist von einem rinnenförmigen Montagegehäuse 5 aus Blech umgeben, das zur Befestigung des Gasgenerators 3 am Fahrzeug dient. Durch die Rinnenform ergibt sich ein Längsschlitz 7, der von gegenüberliegenden Wandungen 9 und 11 des Montagegehäuses 5 begrenzt ist. Die Wandungen 9, 11, die seitlich nach außen abstehen, sind durch U-förmiges Biegen doppellagig ausgebildet. Die beiden Lagen 13, 15 jeder Wandung 9, 11 können dabei sogar aneinander anliegen. Jede Lage 15, die auch den Abschlußrand 17, also das umfangsseitige Ende des Montagegehäuses 5 aufweist, ragt in Richtung zum Gasgenerator 3. Der Abschlußrand 17 drückt den Gasgenerator 3 in das Montagegehäuse 5 und klemmt ihn dadurch. Zwischen den beiden Abschlußrändern 17 und dem Gasgenerator 5 ergibt sich eine Linienberührung über die gesamte Länge des Gasgenerators 3.

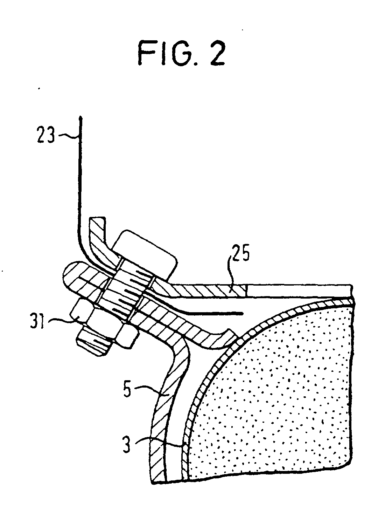

Die Wandungen 9, 11 dienen auch als Flansche zur Befestigung des Montagegehäuses 5 am Fahrzeug. Hierzu sind mehrere Befestigungsöffnungen 21 in den Wandungen 9, 11 vorgesehen, die durch beide Lagen 13, 15 jeder Wandung 9, 11 hindurchgehen. Die Wandungen 9, 11 schließen in der gezeigten Ausführungsform einen stumpfen Winkel miteinander ein. Beim Anschrauben des Montagegehäuses 5 an das Armaturenbrett wird die Lage 13 gegen einen entsprechenden Flansch am Fahrzeug gepreßt, so daß die Abschlußränder 17 noch weiter nach innen gedrückt werden und damit eine höhere Klemmkraft auf den Gasgenerator 3 ausüben. Die Abschlußränder 17 können scharfkantig oder, wie in Fig. 2 gezeigt, mit einer Abkantung ausgebildet sein.

Durch die gezeigte Konstruktion wird auf einfache Weise eine lagesichere Arretierung des Gasgenerators 3 im Montagegehäuse 5 erreicht, auch nach mehreren Jahren Fahrbetrieb. Durch die U-förmige Biegung der Wandungen 9, 11 werden Federelemente gebildet, so daß die Abschlußränder 17 mit einer Vorspannkraft am Gasgenerator 3 anliegen. Gewisse Setzungsvorgänge können dadurch nicht zum Lösen des Gasgenerators 3 im Montagegehäuse 5 führen. Durch die Federwirkung der Wandungen 9, 11 kann der Außenumfang des Gasgenerators 3 auch gewissen Toleranzen unterliegen, ohne daß dies auf die Befestigung des Gasgenerators 3 im Montagegehäuse 5 eine negative Auswirkung hat.

Der in Fig. 2 angedeutete Gassack 23 wird über ein in ihn eingelegtes, seinen Einblasmund umgebendes Rahmenteil 25 an den Wandungen 9, 11 über Schrauben/Mutternverbindungen 31 befestigt. Hierzu wird der den Einblasmund berandende Wandungsabschnitt zwischen dem Rahmenteil 25 und den Wandungen 9, 11, genauer gesagt der Lage 15 jeder Wandung 9, 11, geklemmt. Dieselben Schrauben/Mutternverbindungen 31 dienen auch zum Befestigen des Gassack-Moduls am Fahrzeug.

Ausströmöffnungen im Gasgenerator 3, über die das erzeugte Gas aus dem Gasgenerator 3 im Rückhaltefall ausströmt, können stirnseitig und/oder mantelseitig im Gasgenerator 3 vorgesehen sein.

## Patentansprüche

1. Gassack-Modul eines Fahrzeuginsassen-Rückhaltesystems, mit einem im wesentlichen rohrförmigen Gasgenerator (3), einem den Gasgenerator (3) umgebenden, mit einem Längsschlitz (7) versehenen, rinnenförmigen Montagegehäuse (5) zur Befestigung des Gasgenerators (3) am Fahrzeug und einem Gassack (23), **dadurch gekennzeichnet, daß** die den Längsschlitz (7) begrenzenden, gegenüberliegenden Wandungen (9, 11) des Montagegehäuses (5) jeweils U-förmig zu einer Doppellage (13, 15) gebogen sind, daß sich jeweils die mit einem Abschlußrand (17) versehene Lage (15) jeder Wandung (9, 11) in Richtung des Gasgenerators (3) erstreckt und daß der Abschlußrand (17) an dem Gasgenerator (3) anliegt.

2. Gassack-Modul nach Anspruch 1, **dadurch gekennzeichnet, daß** sich die doppellagigen Wandungen (9, 11) seitlich nach außen erstrecken und zwei Flansche zur Befestigung des Montagegehäuses (5) am Fahrzeug bilden.

3. Gassack-Modul nach Anspruch 2, **dadurch gekennzeichnet, daß** die Wandungen (9, 11) einen stumpfen Winkel miteinander einschließen.

4. Gassack-Modul nach Anspruch 2 oder 3, **dadurch gekennzeichnet, daß** der Gassack (23) über ein in ihn eingelegtes, seinen Einblasmund umgebendes Rahmenteil (25) an den Flanschen befestigt ist.

5. Gassack-Modul nach Anspruch 4, **dadurch gekennzeichnet, daß** der den Einblasmund berandende Wandungsabschnitt des Gassacks zwischen dem Rahmenteil (25) und den Flanschen geklemmt ist.

6. Gassack-Modul nach einem der Ansprüche 2 bis 5, **dadurch gekennzeichnet, daß** die Flansche Befestigungsöffnungen (21) aufweisen.

## Claims

1. A gas bag module of a vehicle occupant restraint system, comprising a substantially tubular gas generator (3), a gutter-shaped mounting housing (5) surrounding the gas generator (3) and provided with an elongated slot (7) for fastening the gas generator (3) to the vehicle, and a gas bag (23), **characterised in that** the opposite walls (9, 11) of the mounting housing (5), defining the elongated slot (7), are each bent in a U-shape to form a double layer (13, 15), that the respective layer (15) of each wall (9, 11) provided with a terminal edge (17) extends towards the gas generator (3), and that the terminal edge (17) lies against the gas generator (3).

2. The gas bag module according to claim 1, **characterised in that** the double-layered walls (9, 11) extend laterally outwards and form two flanges for the fastening of the mounting housing (5) to the vehicle.

3. The gas bag module according to claim 2, **characterised in that** the walls (9, 11) include an obtuse angle with each other.

4. The gas bag module according to claim 2 or 3, **characterised in that** the gas bag (23) is fastened to the flanges via a frame piece (25) placed in it and surrounding its inflation orifice.

5. The gas bag module according to claim 4, **characterised in that** the wall section of the gas bag, surrounding the inflation orifice, is clamped between the frame piece (25) and the flanges.

6. The gas bag module according to any of claims 2 to 5, **characterised in that** the flanges have fastening openings (21).

## Revendications

1. Module de coussin à gaz d'un système de retenue d'occupants de véhicules, comportant un générateur de gaz (3) sensiblement tubulaire, un boîtier de montage (5) en forme de goulotte entourant le générateur de gaz (3) et pourvue d'une fente longitudinale (7), pour fixer le générateur de gaz (3) sur le véhicule, et un coussin à gaz (23), **caractérisé en ce que** les parois (9, 11) du boîtier de montage (5), opposées et limitant la fente longitudinale (7), sont repliées en forme de U pour former une double couche (13, 15), **en ce que** la couche (15) pourvue d'un bord de fermeture (17), de chaque paroi (9, 11) s'étend en direction du générateur de gaz (3) et **en ce que** le bord de fermeture (17) prend appui sur le générateur de gaz (3).

2. Module de coussin à gaz selon la revendication 1, **caractérisé en ce que** les parois (9, 11) à double couche s'étendent latéralement vers l'extérieur et forment deux brides pour fixer le boîtier de montage (5) sur le véhicule.

3. Module de coussin à gaz selon la revendication 2, **caractérisé en ce que** les parois (9, 11) forment ensemble un angle obtus.

4. Module de coussin à gaz selon la revendication 2 ou 3, **caractérisé en ce que** le coussin à gaz (23) est fixé sur les brides par l'intermédiaire d'une partie de cadre (25) insérée dans celui-ci et entourant son embouchure d'insufflation.

5. Module de coussin à gaz selon la revendication 4, **caractérisé en ce que** la portion de paroi du coussin à gaz qui entoure l'embouchure d'insufflation est serrée entre la partie de cadre (25) et les brides.

6. Module de coussin à gaz selon l'une des revendications 2 à 5, **caractérisé en ce que** les brides présentent des ouvertures de fixation (21).
